# EUROPEAN PATENT APPLICATION

(11) **EP 2 905 873 A1**
(43) Date of publication of application: **12.08.2015**
(21) Application number: 13843660.5
(22) Date of filing: 12.09.2013
(51) Int. Cl.: H02J 17/00, B60L 5/00, B60L 11/18, B60M 7/00, H02J 7/00

(54) **POWER RECEPTION DEVICE, POWER TRANSMISSION DEVICE, AND NONCONTACT POWER TRANSFER APPARATUS**

(30) Priority: 03.10.2012 JP 2012221260
(71) Applicant: Kabushiki Kaisha Toyota Jidoshokki, Kariya-shi, Aichi 448-8671 (JP)
(72) Inventor: TSUNEKAWA, Yuki, Kariya-shi, Aichi 448-8671 (JP); KONDO, Tadashi, Kariya-shi, Aichi 448-8671 (JP); KOIKE, Tsuyoshi, Kariya-shi, Aichi 448-8671 (JP); KATSUNAGA, Hiroshi, Kariya-shi, Aichi 448-8671 (JP); MATSUKURA, Keisuke, Kariya-shi, Aichi 448-8671 (JP); TAGUCHI, Yuichi, Kariya-shi, Aichi 448-8671 (JP); TOGANO, Hiroki, Kariya-shi, Aichi 448-8671 (JP); INOUE, Keisuke, Kariya-shi, Aichi 448-8671 (JP)
(74) Representative: TBK
(86) International application number: PCT/JP2013/074622
(87) International publication number: WO 2014/054396

(57) **Abstract**

A power receiving device capable of receiving alternating-current power in a wireless manner from a power supply device includes a secondary side coil, a fluctuating load, an impedance conversion unit, and a grasping unit. The secondary side coil is able to receive the alternating-current power from a primary side coil. The impedance of the fluctuating load fluctuates according to the power value of inputted power. The impedance conversion unit is provided between the secondary side coil and the fluctuating load and configured such that the impedance thereof is variable. The grasping unit grasps the power value of the alternating-current power outputted from an alternating-current power supply. The impedance of the impedance conversion unit is variably controlled when an electric characteristic dependent on the relative positions of the primary side coil and the secondary side coil fluctuates in the situation in which the grasping unit grasps that the power value of alternating-current power outputted from the alternating-current power supply does not fluctuate.

## Description

### TECHNICAL FIELD

The present invention relates to a power receiving device, a power supply device, and a wireless power transfer apparatus.

### BACKGROUND ART

A wireless power transfer apparatus using no power cords and no power transfer cables includes a power receiving device. In the prior art, a known power receiving device uses, for example, magnetic field resonance. For example, patent document 1 describes a power receiving device that includes a secondary coil capable of performing magnetic field resonance with a primary coil arranged in a power supply device. When the primary coil and the secondary coil perform magnetic field resonance, the power supply device transfers alternating current power to the power receiving device. When the power receiving device, which further includes a rectifier and a vehicle battery, receives alternating current power, the alternating current power is rectified by the rectifier to direct current power and input to the vehicle battery. As a result, the vehicle battery is charged.

### PRIOR ART DOCUMENT

### PATENT DOCUMENT

Patent Document 1: Japanese Laid-Open Patent Publication No. 2009-106136

### SUMMARY OF THE INVENTION

### PROBLEMS THAT ARE TO BE SOLVED BY THE INVENTION

Such a power receiving device and a wireless power transfer apparatus that are described above may include a variable load (e.g., battery), the impedance of which varies in accordance with the value of input power. In this structure, the transfer efficiency may decrease when the two coils are displaced.

The above problem is not limited to a supply device that transfers power using magnetic field resonance in a wireless manner. The same problem may be applied to a supply device that transfers power using electromagnetic induction in a wireless manner.

It is an object of the present invention to provide a power receiving device and a power supply device that appropriately limit decreases in the transfer efficiency and a wireless power transfer apparatus including the power receiving device and the power supply device.

### MEANS FOR SOLVING THE PROBLEM

To achieve the above object, one aspect of the present invention provides a power receiving device capable of receiving alternating current power in a wireless manner from a power supply device including an alternating current power supply that outputs the alternating current power and a primary coil that receives the alternating current power. The power receiving device includes a secondary coil, a variable load, an impedance conversion unit, and an acknowledgement unit. The secondary coil is capable of receiving the alternating current power from the primary coil. The variable load has impedance that varies in accordance with a value of input power. The impedance conversion unit is arranged between the secondary coil and the variable load and configured to have a variable impedance. The acknowledgement unit acknowledges a value of the alternating current power output from the alternating current power supply. Under a situation in which the acknowledgement unit acknowledges that the value of the alternating current power output from the alternating current power supply is unvaried, the impedance of the impedance conversion unit is variably controlled when an electrical property that is dependent on a relative position of the primary coil and the secondary coil varies.

In the above configuration, under a situation in which the value of the alternating current power output from the alternating current power supply is unvaried, when the electrical property that is dependent on the relative position of the coils varies, the impedance of the impedance conversion unit is variably controlled. This limits decreases in the transfer efficiency.

Additionally, under the situation, in which the value of the alternating current power output from the alternating current power supply is unvaried, the impedance of the variable load tends to be unvaried. Thus, even when the electrical property is dependent on the impedance of the variable load, if the electrical property varies under the situation, in which the value of the alternating current power output from the alternating current power supply is unvaried, the relative position of the coils may be varied. Consequently, the impedance of the impedance conversion unit may be variably controlled without taking into consideration variations in the impedance of the variable load. This simplifies the variable control and the structure of the impedance conversion unit.

Preferably, the electrical property includes at least one of transfer efficiency, the value of the alternating current power received by the secondary coil, a value of reflected wave power, and impedance.

The above configuration allows detection of variations in the relative position of the coils by employing at least one of the transfer efficiency, the value of the alternating current power received by the secondary coil, the value of the reflected wave power, and the impedance, as the electrical property.

In this case, each of parameters described above is dependent not only on the relative position of the coils but also on the impedance of the variable load. Thus, when each of the parameters varies, it is difficult to specify the cause of the variation.

In this regard, the cause of variations in each parameter may be specified as variations in the relative position of the coils since the value of the alternating current power output from the alternating current power supply is unvaried. This allows each parameter to be used to appropriately cope with variations in the relative position of the coils.

Preferably, the impedance conversion unit includes a first impedance conversion unit and a second impedance conversion unit. The second impedance conversion unit is arranged between the first impedance conversion unit and the variable load and configured to have a variable impedance. The impedance of the second impedance conversion unit is variably controlled when the value of the alternating current power output from the alternating current power supply varies.

In the above configuration, the impedance conversion unit that copes with variations in the relative position of the coils is separated from the impedance conversion unit that copes with variations in the impedance of the variable load in accordance with variations in the value of the alternating current power. This avoids a situation in which one of the variations cannot be coped with when coping with the other variation.

Preferably, a wireless power transfer apparatus includes the power supply device and the power receiving device.

The above configuration limits decreases in the transfer efficiency of the wireless power transfer apparatus.

### BRIEF DESCRIPTION OF THE DRAWINGS

Fig. 1 is a circuit diagram of one embodiment of a wireless power transfer apparatus according to the present invention.
Figs. 2A and 2B are conceptual diagrams each illustrating the relative position of a power transmitter and a power receiver of Fig. 1.
Fig. 3 is a circuit diagram of one example of a wireless power transfer apparatus.

### EMBODIMENTS OF THE INVENTION

One embodiment of a wireless power transfer apparatus (wireless power transfer system) including a power receiving device according to the present invention will now be described.

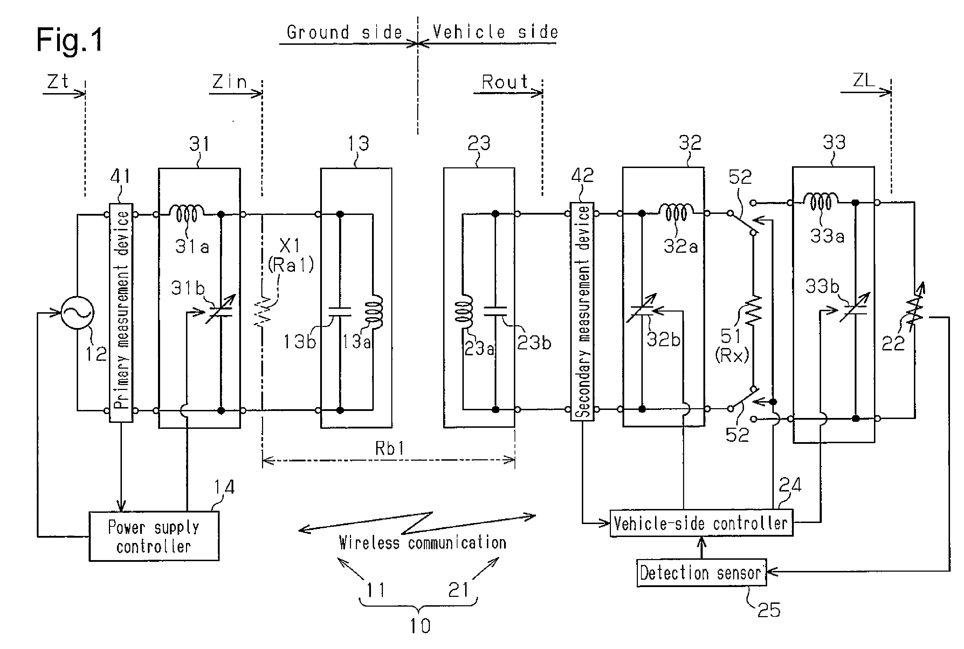

As shown in Fig. 1, a wireless power transfer apparatus 10 includes a ground-side device 11 located on the ground and a vehicle-side device 21 installed in a vehicle. The ground-side device 11 corresponds to a power supply device (primary device). The vehicle-side device 21 corresponds to a power receiving device (secondary device).

The ground-side device 11 includes a high frequency power supply 12 (alternating current power supply), which is capable of outputting high frequency power (alternating current power) of a predetermined frequency. The high frequency power supply 12 is configured to be capable of converting power, which is received from the system power, to high frequency power and outputting the converted high frequency power. Additionally, the high frequency power supply 12 is configured to be capable of outputting high frequency power of different values.

High frequency power is transferred from the high frequency power supply 12 to the vehicle-side device 21 in a wireless manner and input to a load 22 arranged in the vehicle-side device 21. More specifically, the wireless power transfer apparatus 10 includes a power transmitter 13 (primary resonance circuit) arranged in the ground-side device 11 and a power receiver 23 (secondary resonance circuit) arranged in the vehicle-side device 21, which function to transfer power between the ground-side device 11 and the vehicle-side device 21.

The power transmitter 13 and the power receiver 23, which have the same structure, are configured to be capable of performing magnetic field resonance. More specifically, the power transmitter 13 includes a resonance circuit formed by a primary coil 13a and a primary capacitor 13b connected in parallel. The power receiver 23 includes a resonance circuit formed by a secondary coil 23a and a secondary capacitor 23b connected in parallel. The power transmitter 13 and the power receiver 23 are set to have the same resonance frequency.

In this configuration, when the power transmitter 13 (primary coil 13a) receives high frequency power from the high frequency power supply 12, the power transmitter 13 and the power receiver 23 (secondary coil 23a) perform magnetic field resonance. Consequently, the power receiver 23 receives some of the energy of the power transmitter 13. That is, the power receiver 23 receives high frequency power from the power transmitter 13.

When the power receiver 23 receives high frequency power, the high frequency power is input to the load 22. The load 22 incudes a rectifier (rectifying unit) and a vehicle battery (power storage device). The rectifier, which rectifies high frequency power to direct current power, includes a semiconductor element (diode) that is driven when a predetermined threshold voltage is applied. The rectified direct current power is input to the vehicle battery. The high frequency power received by the power receiver 23 is used to charge the vehicle battery.

The ground-side device 11 includes a power supply controller 14, which controls the high frequency power supply 12. Additionally, the vehicle-side device 21 includes a vehicle-side controller 24, which is capable of performing wireless communication with the power supply controller 14. The wireless power transfer apparatus 10, for example, starts and stops transferring power in accordance with information exchanged between the controllers 14, 24. The controllers 14, 24 each correspond to a "control unit".

One example of the information exchange will now be specifically described. For example, the power supply controller 14 transmits information of the value of high frequency power to the vehicle-side controller 24 when the high frequency power supply 12 starts outputting high frequency power or when the value of the high frequency power changes. When receiving the information, the vehicle-side controller 24 acknowledges the value of high frequency power that the high frequency power supply 12 is outputting. That is, the vehicle-side controller 24 functions as an acknowledgement unit that acknowledges the value of the high frequency power output from the high frequency power supply 12. In this case, unless receiving the information of the value of the high frequency power, the vehicle-side controller 24 determines that the value is unchanged, that is, the value of the high frequency power output from the high frequency power supply 12 is unvaried.

The vehicle-side device 21 includes a detection sensor 25 that detects the state of charge of the vehicle battery. The detection sensor 25 transmits a detection result to the vehicle-side controller 24. This allows the vehicle-side controller 24 to acknowledge the state of charge of the vehicle battery.

The wireless power transfer apparatus 10 includes a plurality of impedance converters 31 to 33. Namely, the wireless power transfer apparatus 10 includes a first impedance converter 31, a second impedance converter 32, and a third impedance converter 33. The first impedance converter 31 serves as a primary impedance conversion unit arranged in the ground-side device 11 between the high frequency power supply 12 and the power transmitter 13. The second impedance converter 32 and the third impedance converter 33 are arranged in the vehicle-side device 21 between the power receiver 23 and the load 22. The second impedance converter 32 corresponds to an "impedance conversion unit" or a "first impedance conversion unit". The third impedance converter 33 corresponds to a "second impedance conversion unit". The second impedance converter 32 is connected to the power receiver 23. The third impedance converter 33 is connected to the load 22.

The first impedance converter 31 includes a reversed-L-type LC circuit formed by a first inductor 31 a and a first capacitor 31 b. The second impedance converter 32 includes an L-type LC circuit formed by a second inductor 32a and a second capacitor 32b. The third impedance converter 33 includes a reversed-L-type LC circuit formed by a third inductor 33a and a third capacitor 33b.

The inventors have found that the real part of impedance from an output terminal of the power receiver 23 (secondary coil 23a) to the load 22 contributes to transfer efficiency between the power transmitter 13 and the power receiver 23. More specifically, the inventors have found that the real part of the impedance from the output terminal of the power receiver 23 to the load 22 includes a specific resistance Rout that relatively increases the transfer efficiency to be higher than other resistances. In other words, the inventors have found that the real part of the impedance from the output terminal of the power receiver 23 to the load 22 includes the specific resistance Rout (second resistance) that increases the transfer efficiency to be higher than a predetermined resistance (first resistance).

More specifically, when a virtual load X1 is hypothetically arranged at an input terminal of the power transmitter 13, the specific resistance Rout is √(Ra1×Rb1), where the resistance of the virtual load X1 is denoted by Ra1, and the resistance from the power receiver 23 (more specifically, output terminal of the power receiver 23) to the virtual load X1 is denoted by Rb1.

Based on the above findings, the second impedance converter 32 and the third impedance converter 33 impedance-convert impedance ZL of the load 22 so that the impedance from the output terminal of the power receiver 23 to the load 22 (impedance of the input terminal of the second impedance converter 32) approaches (preferably, equals to) the specific resistance Rout.

The value of high frequency power output from the high frequency power supply 12 is dependent on impedance from an output terminal of the high frequency power supply 12 to the load 22, that is, impedance of an input terminal of the first impedance converter 31.

In this configuration, the first impedance converter 31 impedance-converts impedance Zin from the input terminal of the power transmitter 13 to the load 22 under a situation in which the impedance from the output terminal of the power receiver 23 to the load 22 is close to the specific resistance Rout so that the high frequency power supply 12 outputs high frequency power of a desired value. For example, the high frequency power supply 12 may output power having a value that is needed for direct current power, which is input to the vehicle battery of the load 22, to have a value that is suited for charging. The power output from the high frequency power supply 12 and having such a value is referred to as high frequency power of the value suited for charging. Then, impedance from the output terminal of the high frequency power supply 12 to the load 22 (impedance of the input terminal of the first impedance converter 31) that allows the high frequency power supply 12 to output the high frequency power of the value suited for charging is referred to as an input impedance suited for charging Zt. In this case, the first impedance converter 31 impedance-converts the impedance Zin from the input terminal of the power transmitter 13 to the load 22 so that the impedance from the output terminal of the high frequency power supply 12 to the load 22 becomes the input impedance suited for charging Zt. The input impedance suited for charging Zt corresponds to "predetermined impedance".

The specific resistance Rout is determined by the configurations of the power transmitter 13 and the power receiver 23 (shapes and inductances of the coils 13a, 23a, capacitances of the capacitors 13b, 23b, and the like) and the relative position of the power transmitter 13 and the power receiver 23. Thus, the specific resistance Rout varies when the power transmitter 13 and the power receiver 23 are displaced from a predetermined reference position, that is, when the relative position of the power transmitter 13 and the power receiver 23 varies.

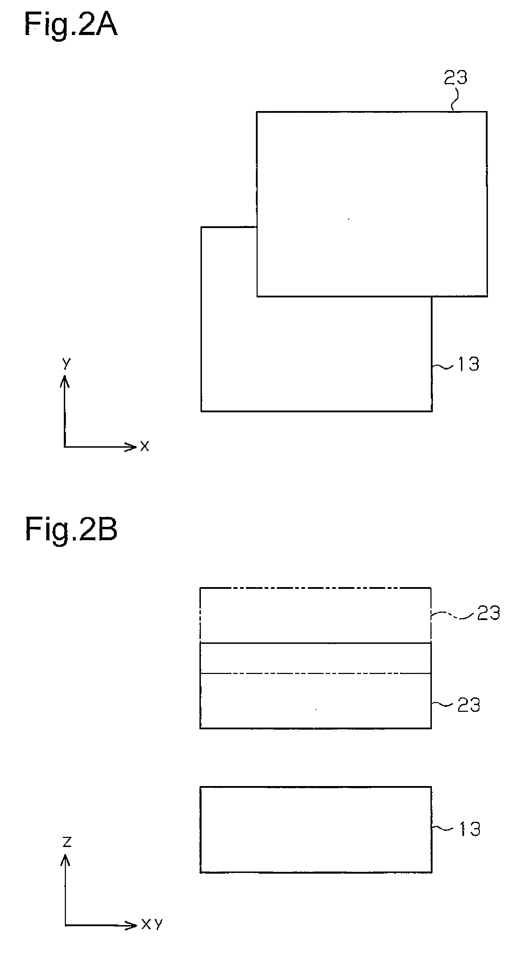

Examples of variations in the relative position of the power transmitter 13 and the power receiver 23 are shown in Figs. 2A and 2B. In Fig. 2A, the power transmitter 13 and the power receiver 23 are displaced from a reference position that is defined by a position where the entire power transmitter 13 is opposed to the entire power receiver 23. In Fig. 2B, the distance between the power transmitter 13 and the power receiver 23 may vary in accordance with the mode of installing the vehicle-side device 21 in a vehicle, variations in height of vehicles, and the like.

The impedance of the vehicle battery in the load 22 varies in accordance with the value of input direct current power. That is, the load 22 is a variable load 22 having the impedance ZL that varies (changes) in accordance with the value of input power.

Such variations in the specific resistance Rout and the impedance ZL of the variable load 22 may decrease the transfer efficiency or cause failure to obtain high frequency power of a desired value. To solve this problem, the wireless power transfer apparatus 10 includes a structure that follows (copes with) variations in the relative position of the power transmitter 13 and the power receiver 23 and variations in the impedance ZL of the variable load 22. The structure will now be described.

Referring to Fig. 1, the impedance converters 31 to 33 each have a constant (impedance) including the real part (resistance) and the imaginary part (reactance), at least one of which is variable (adjustable). In the present embodiment, as shown in Fig. 1, the capacitors 31 b to 33b of the impedance converters 31 to 33 each have a variable capacitance. The constant (impedance) may also be referred to as a conversion ratio, an inductance, or a capacitance.

Under a situation in which the power transmitter 13 and the power receiver 23 are located in the reference position, and the high frequency power supply 12 outputs high frequency power used for charging, the constant of the second impedance converter 32 in an initial state has such a value that converts the impedance from the input terminal of the third impedance converter 33, which has the constant in an initial state, to the variable load 22 to the specific resistance Rout. Also, under a situation in which the power transmitter 13 and the power receiver 23 are located in the reference position, and the high frequency power supply 12 outputs the charging high frequency power, the constant of the first impedance converter 31 in an initial state is set to a value that converts the impedance Zin from the input terminal of the power transmitter 13 to the variable load 22 to the input impedance suited for charging Zt.

A primary measurement device 41, which serves as a measurement unit, is arranged between the high frequency power supply 12 and the power transmitter 13, more specifically, between the high frequency power supply 12 and the first impedance converter 31. The primary measurement device 41, which is electrically connected to the power supply controller 14, measures a voltage waveform and a current waveform and transmits a measurement result to the power supply controller 14 in response to a request from the power supply controller 14.

A secondary measurement device 42, which serves as a measurement unit, is arranged between the power receiver 23 and the variable load 22, more specifically, between the power receiver 23 and the second impedance converter 32. The secondary measurement device 42, which is electrically connected to the vehicle-side controller 24, measures a voltage waveform and a current waveform and transmits a measurement result to the vehicle-side controller 24 in response to a request from the vehicle-side controller 24. The controllers 14, 24 variably control the constants of the impedance converters 31 to 33 based on the measurement devices 41, 42, respectively.

A fixed resistor (fixed load) 51 is arranged between the second impedance converter 32 and the third impedance converter 33. The fixed resistor 51 has resistance (impedance) that is constant regardless of the value of input high frequency power. The vehicle-side device 21 includes a relay 52. The relay 52 serves as a switch that switches a connected subject of the second impedance converter 32 to the fixed resistor 51 or to the third impedance converter 33 connected to the variable load 22. The connected subject of the second impedance converter 32 functions as an output destination to which the high frequency power received by the power receiver 23 is output from the second impedance converter 32.

In a charging sequence in which the vehicle battery is charged, the controllers 14, 24 variably control the constants of the impedance converters 31 to 33 and control the relay 52, respectively. The charging sequence will now be described in detail. The controllers 14, 24 conduct the charging sequence as exchanging information with each other.

By exchanging information, the controllers 14, 24 check that the vehicle is located where the vehicle can be charged, more specifically, the power transmitter 13 and the power receiver 23 are located where magnetic field resonance can be performed.

Subsequently, the vehicle-side controller 24 controls the relay 52 to set the connected subject of the second impedance converter 32 to the fixed resistor 51.

The power supply controller 14 controls the high frequency power supply 12 so that the high frequency power supply 12 outputs predetermined high frequency power (small alternating current power) used for adjusting.

Subsequently, the controllers 14, 24 acknowledge the measurement results of the measurement devices 41, 42, respectively. Then, the controllers 14, 24 each determine whether or not there is a defect in the power transfer. For example, the controllers 14, 24 each determine whether or not the transfer efficiency is higher than or equal to predetermined threshold efficiency.

When the transfer efficiency is lower than the threshold efficiency, the impedance from the output terminal of the power receiver 23 to the variable load 22 may be deviated from the specific resistance Rout. In this case, the vehicle-side controller 24 variably controls the constant of the second impedance converter 32 so that the impedance approaches the specific resistance Rout (variable control prior to charging). In this case, the specific resistance Rout is determined, for example, by using various types of parameters (e.g., value of power and power factor) derived from the voltage waveform and the current waveform measured by the secondary measurement device 42.

When determining that the transfer efficiency becomes the threshold efficiency or higher resulting from the variable control performed on the constant of the second impedance converter 32, the power supply controller 14 determines whether or not the value of high frequency power output from the high frequency power supply 12 (the value of high frequency power measured by the primary measurement device 41) equals to the value of the high frequency power used for adjusting. When the value of the high frequency power output from the high frequency power supply 12 is deviated from the value of the adjusting high frequency power, the impedance from the output terminal of the high frequency power supply 12 to the variable load 22 may be deviated from the input impedance suited for charging Zt. In this case, the power supply controller 14 variably controls the constant of the first impedance converter 31 based on the measurement result of the primary measurement device 41 so that the impedance approaches the input impedance suited for charging Zt. More specifically, the constant of the first impedance converter 31 is variably controlled after the constant of the second impedance converter 32 is variably controlled.

Although the constants of the impedance converters 31, 32 are variably controlled, the transfer efficiency may be lower than the threshold efficiency or the value of power output from the high frequency power supply 12 may be deviated from the value of the adjusting high frequency power. In such a case, there may be a defect in the power transfer. Thus, the charging is terminated, and such a condition is reported.

When there is no defect in the power transfer, the power supply controller 14 controls the high frequency power supply 12 so that the high frequency power supply 12 outputs the charging high frequency power (large alternating current power) that has a larger value than the adjusting high frequency power. The power supply controller 14 notifies the vehicle-side controller 24 that the charging high frequency power is output.

When the value of the high frequency power varies (when receiving the above notification), the vehicle-side controller 24 controls the relay 52 to change the connected subject of the second impedance converter 32 to the third impedance converter 33.

Resistance Rx of the fixed resistor 51 and the constant of the third impedance converter 33 in the initial state are set so that the resistance (impedance) Rx of the fixed resistor 51 approaches (preferably, equals to) the impedance from the input terminal of the third impedance converter 33 to the variable load 22 when the charging high frequency power is output. Thus, the impedance in a location subsequent to the output terminal of the second impedance converter 32 may be unchanged even when the relay 52 is switched.

Subsequently, the controllers 14, 24 each calculate the transfer efficiency, which is a type of electrical properties that are dependent on the relative position of the coils 13a, 23a, using the measurement results of the measurement devices 41, 42 in a predetermined frequency. This calculation is performed in a condition in which the high frequency power supply 12 outputs the charging high frequency power. The controllers 14, 24 each determine whether or not the transfer efficiency is decreased in the condition in which the high frequency power supply 12 outputs the charging high frequency power.

The phrase "condition in which the high frequency power supply 12 outputs the charging high frequency power" may be referred to as a condition in which the high frequency power supply 12 outputs high frequency power of an unchanged value or a condition in which the high frequency power supply 12 outputs high frequency power of a constant value.

Decreases in the transfer efficiency may be determined as follows. For example, the controllers 14, 24 each store transfer efficiency that is previously calculated. Then, the controllers 14, 24 each determine whether or not a difference between transfer efficiency that is currently calculated and the previously calculated transfer efficiency is within a predetermined allowed range. The comparison subject of the transfer efficiency is not limited to the previously calculated transfer efficiency and thus may be transfer efficiency calculated in a condition in which the adjusting high frequency power is output. Alternatively, the comparison subject of the transfer efficiency may be the threshold efficiency used to determine whether or not there is a defect in the power transfer.

When the controllers 14, 24 each determine that the transfer efficiency is not decreased, the power transfer continues. When the vehicle-side controller 24 determines that the transfer efficiency is decreased, the coils 13a, 23a may be displaced. Thus, the vehicle-side controller 24 variably controls the constant of the second impedance converter 32 (variable control during charging) so that the transfer efficiency increases (decreases in the value of the transfer efficiency is reduced). After the constant of the second impedance converter 32 is variably controlled, the power supply controller 14 variably controls the constant of the first impedance converter 31 so that the impedance from the output terminal of the high frequency power supply 12 to the variable load 22 becomes the input impedance suited for charging Zt.

When the constants of the impedance converters 31, 32 are variably controlled during charging, the relay 52 is not switched. More specifically, during charging, the constants of the impedance converters 31, 32 are variably controlled when the second impedance converter 32, the third impedance converter 33, and the variable load 22 are connected.

Additionally, the vehicle-side controller 24 periodically acknowledges the state of charge of the vehicle battery during charging. When the state of charge of the vehicle battery reaches a trigger changing amount, the vehicle-side controller 24 notifies the power supply controller 14 of such a condition. When receiving the notification, the power supply controller 14 changes the value of the high frequency power output from the high frequency power supply 12 and notifies the vehicle-side controller 24 that the change is made. In accordance with variations (changes) in the value of power, the impedance ZL of the variable load 22 varies. Thus, the impedance from the output terminal of the power receiver 23 to the variable load 22 is deviated from the specific resistance Rout.

When receiving the notification of the change in the value of power, the vehicle-side controller 24 variably controls the constant of the third impedance converter 33 so that the impedance from the output terminal of the power receiver 23 to the variable load 22 is constant (specific resistance Rout) regardless of variations in the value of power. More specifically, the vehicle-side controller 24 variably controls the constant of the third impedance converter 33 in accordance with variations in the impedance ZL of the variable load 22 so that the impedance from the input terminal of the third impedance converter 33 to the variable load 22 is constant.

Although variable control does not necessarily have to be performed on the constant of the third impedance converter 33, for example, feedback control may be performed as referring to the measurement results of the measurement devices 41, 42. Additionally, a map data may be arranged. For example, the map data includes power value information that relates to the value of the high frequency power output from the high frequency power supply 12 and information related to the third impedance converter 33 (more specifically, constant information used to specify the constant of the third impedance converter 33), which are linked in a one-to-one relationship. In this case, the vehicle-side controller 24 obtains constant information that corresponds to the currently output high frequency power by referring to the map data. The vehicle-side controller 24 variably controls the constant of the third impedance converter 33 so that the constant of the third impedance converter 33 becomes the constant specified by the constant information.

After the constant of the third impedance converter 33 is variably controlled, the controllers 14, 24 each periodically calculate the transfer efficiency. When the transfer efficiency is decreased, the controllers 14, 24 variably control the constants of the first impedance converter 31 and the second impedance converter 32, respectively.

Then, the vehicle-side controller 24 determines whether or not the state of charge of the vehicle battery reaches a fully charged amount (a trigger stopping amount) based on the detection result of the detection sensor 25. When the state of charge of the vehicle battery reaches the fully charged state, the vehicle-side controller 24 notifies the power supply controller 14 of such a condition. When receiving the notification, the power supply controller 14 controls the high frequency power supply 12 to stop outputting high frequency power.

The operation of the present embodiment of the wireless power transfer apparatus 10 will now be described.

The second impedance converter 32 performs impedance conversion so that the impedance from the output terminal of the power receiver 23 to the variable load 22 becomes the specific resistance Rout. Thus, the transfer efficiency is improved.

The first impedance converter 31 performs impedance conversion so that the impedance from the output terminal of the high frequency power supply 12 to the variable load 22 becomes the input impedance suited for charging Zt. Thus, the high frequency power having the value suited for charging is supplied to the variable load 22.

The transfer efficiency may be decreased under a situation in which the value of high frequency power output from the high frequency power supply 12 is unvaried. In such a case, there is a high probability that the relative position of the coils 13a, 23a is varied. In this case, the constants of the first impedance converter 31 and the second impedance converter 32 are variably controlled. This limits decreases in the transfer efficiency caused by variations in the relative position of the coils 13a, 23a and also limits variations in the value of the high frequency power output from the high frequency power supply 12.

When the value of high frequency power output from the high frequency power supply 12 varies, the constant of the third impedance converter 33 is variably controlled so that the impedance is unvaried from the input terminal of the third impedance converter 33 to the variable load 22. This maintains a condition in which the impedance from the output terminal of the power receiver 23 is close to the specific resistance Rout.

The present embodiment, which has been described in detail, has the advantages described below.
(1) The second impedance converter 32 having a variable constant (impedance) is arranged in the vehicle-side device 21 between the power receiver 23 and the variable load 22. Under a situation in which the vehicle-side controller 24 acknowledges that the value of high frequency power output from the high frequency power supply 12 is unvaried, the constant of the second impedance converter 32 is variably controlled based on variations (decreases) in the transfer efficiency, which is a type of electrical properties that are dependent on the relative position of the coils 13a, 23a. This appropriately limits decreases in the transfer efficiency when the relative position of the coils 13a, 23a varies.

In particular, if the relative position of the coils 13a, 23a varies under a situation in which the value of high frequency power output from the high frequency power supply 12 varies, the specific resistance Rout and the impedance ZL of the variable load 22 both would vary. This would result in failure to determine a constant of the second impedance converter 32 that obtains the specific resistance Rout and complicate the control to determine the constant. Additionally, the second impedance converter 32 would have a complex configuration to follow the above two variations (e.g., expansion of a range in which a constant varies).

In this regard, the present embodiment focuses on a point such that a value of high frequency power input to the variable load 22 is a factor to vary the impedance ZL of the variable load 22. Such a value is dependent on the value of high frequency power output from the high frequency power supply 12. More specifically, when the power transfer is decreased under a situation in which the value of high frequency power output from the high frequency power supply 12 is unvaried, there is a high probability that the relative position of the coils 13a, 23a varies. In this case, the constant of the second impedance converter 32 is variably controlled. Consequently, the constant of the second impedance converter 32 is variably controlled without taking into consideration the variations in the impedance ZL of the variable load 22. This avoids the above problem.
(2) The transfer efficiency is employed as a type of electrical properties that are dependent on the relative position of the coils 13a, 23a. This allows an appropriate detection of variations in the relative position of the coils 13a, 23a.
   The transfer efficiency is dependent on not only the relative position of the coils 13a, 23a but also the impedance ZL of the variable load 22. Thus, when the transfer efficiency varies, it is difficult to specify the cause of the variation.
   To solve this problem, the present embodiment focuses on whether or not the value of high frequency power output from the high frequency power supply 12 varies. Thus, the cause of the variations in the transfer efficiency may be specified. Consequently, variations in the relative position of the coils 13a, 23a may be appropriately followed using the transfer efficiency.
(3) The third impedance converter 33 is arranged between the second impedance converter 32 and the variable load 22. When the value of high frequency power output from the high frequency power supply 12 varies, the constant of the third impedance converter 33 is variably controlled. In this manner, an impedance converter that follows variations in the relative position of the coils 13a, 23a is separated from an impedance converter that follows variations in the impedance ZL of the variable load 22. This avoids a situation in which one of the variations cannot be followed when following the other variation. Thus, variations in the relative position of the coils 13a, 23a and in the impedance ZL of the variable load 22 both may be followed.
(4) In particular, as described above, use of only the transfer efficiency would lead to failure to specify which variation has occurred. In this regard, the present embodiment acknowledges whether or not the value of high frequency power output from the high frequency power supply 12 varies in addition to decreases in the transfer efficiency. This specifies which one of the above two variations has occurred. Thus, it may be determined whether the constant of the second impedance converter 32 or the constant of the third impedance converter 33 is variably controlled.
(5) The fixed resistor 51 is arranged separately from the variable load 22. The relay 52 is arranged so that the connected subject of the second impedance converter 32 is switched to the fixed resistor 51 or the third impedance converter 33 and the variable load 22. Prior to starting to charge, the connected subject of the second impedance converter 32 is set to the fixed resistor 51. Under this condition, the constant of the second impedance converter 32 is variably controlled (variable control prior to charging). Thus, the constant of the second impedance converter 32 may be variably controlled without taking into consideration variations in the impedance ZL of the variable load 22. This allows variable control to be easily performed on the constant in correspondence with variations in the relative position of the coils 13a, 23a.
   More specifically, if the constant of the second impedance converter 32 is variably controlled under a situation in which the second impedance converter 32 is connected to the third impedance converter 33, high frequency power would vary in value when input to the input terminal of the third impedance converter 33. Thus, variable control would need to be performed on the constant of the third impedance converter 33 to correspond to variations in the impedance ZL of the variable load 22. In other words, variable control would need to be simultaneously performed on the constant of the second impedance converter 32 and the constant of the third impedance converter 33. This complicates the control. In this regard, the present embodiment includes the fixed resistor 51 having the constant resistance Rx. Thus, the constant of the second impedance converter 32 may be variably controlled without variably controlling the constant of the third impedance converter 33. This allows variable control to be easily performed on the constant in correspondence with variations in the relative position of the coils 13a, 23a.
(6) After the constant of the second impedance converter 32 is variably controlled prior to charging, the connected subject of the second impedance converter 32 is set to the third impedance converter 33, which is connected to the variable load 22. When the relative position of the coils 13a, 23a varies during charging, the constant of the second impedance converter 32 is variably controlled without connecting to the fixed resistor 51 (variable control during charging). This limits decreases in the transfer efficiency without interrupting the charging.
   Before charging is started, the impedance between the coils 13a, 23a generally varies in a wide range due to a high degree of freedom for the mode of parking a vehicle. However, the impedance between the coils 13a, 23a varies in a small range during charging. Thus, variable control performed on the second impedance converter 32 tends to be relatively simple. This allows variable control to be performed on the constant of the second impedance converter 32 without connecting the second impedance converter 32 to the fixed resistor 51.
   The focus may be put on counts of the variable control performed on the constant of the second impedance converter 32. In such a case, when the constant of the second impedance converter 32 is variably controlled for the first time from when the vehicle-side device 21 starts receiving power from the ground-side device 11, the relay 52 sets the connected subject of the second impedance converter 32 to the fixed resistor 51. Then, when the constant of the second impedance converter 32 is variably controlled for the second time or later, the relay 52 sets the connected subject of the second impedance converter 32 to the third impedance converter 33 and the variable load 22. In this case, the phrase "the constant of the second impedance converter 32 is variably controlled for the first time" means that variable control is performed for the first time from when the charging sequence starts. This excludes, for example, variable control that is performed for the first time from when the charging sequence is intermitted and then resumed.
(7) The inventors have found that the real part of the impedance from the output terminal of the power receiver 23 to the variable load 22 includes the specific resistance Rout that relatively increases the transfer efficiency compared to other resistances. The second impedance converter 32 performs impedance conversion so that the impedance from the output terminal of the power receiver 23 to the variable load 22 approaches the specific resistance Rout. This improves the transfer efficiency.
   The constant of the second impedance converter 32 is variably controlled corresponding to the specific resistance Rout, which varies in accordance with variations in the relative position of the coils 13a, 23a. This allows high transfer efficiency to be maintained even when the relative position of the coils 13a, 23a varies.
(8) The first impedance converter 31 impedance-converts the impedance Zin from the input terminal of the power transmitter 13 to the variable load 22 under a situation in which the impedance from the output terminal of the power receiver 23 to the variable load 22 is close to the specific resistance Rout. More specifically, the first impedance converter 31 performs impedance conversion so that the impedance from the output terminal of the high frequency power supply 12 to the variable load 22 becomes the input impedance suited for charging Zt. Thus, the vehicle battery may be appropriately charged.
   Additionally, the power supply controller 14 variably controls the constant of the first impedance converter 31 in accordance with displacement of the coils 13a, 23a. Thus, the impedance from the output terminal of the high frequency power supply 12 to the variable load 22 may become the input impedance suited for charging Zt regardless of the displacement. More specifically, the power supply controller 14 variably controls the constant of the first impedance converter 31 so that the impedance from the output terminal of the high frequency power supply 12 to the variable load 22 approaches a constant value regardless of variations in the relative position of the coils 13a, 23a. This stabilizes power supply.
(9) The impedance Zin from the input terminal of the power transmitter 13 to the variable load 22 varies in accordance with the constant of the second impedance converter 32. Focusing on this point, the constant of the first impedance converter 31 is variably controlled after the constant of the second impedance converter 32 is variably controlled. This avoids unnecessary variable control.
   More specifically, for example, if the constant of the second impedance converter 32 is variably controlled after the constant of the first impedance converter 31 is variably controlled, the variable control performed on the constant of the second impedance converter 32 would cause the impedance from the output terminal of the high frequency power supply 12 to the variable load 22 to be deviated from the input impedance suited for charging Zt. Consequently, variable control would need to be performed again on the constant of the first impedance converter 31.
   In this regard, the present embodiment first variably controls the constant of the second impedance converter 32. This avoids the above problem, thereby simplifying the control.
(10) The high frequency power supply 12 is controlled to output the adjusting high frequency power, which has a smaller value than the charging high frequency power, when the second impedance converter 32 is connected to the fixed resistor 51. The high frequency power supply 12 is controlled to output the charging high frequency power when the second impedance converter 32 is connected to the third impedance converter 33. This limits power loss that may occur when the constants of the impedance converters 31, 32 are each variably controlled.

The embodiment may be modified as follows.

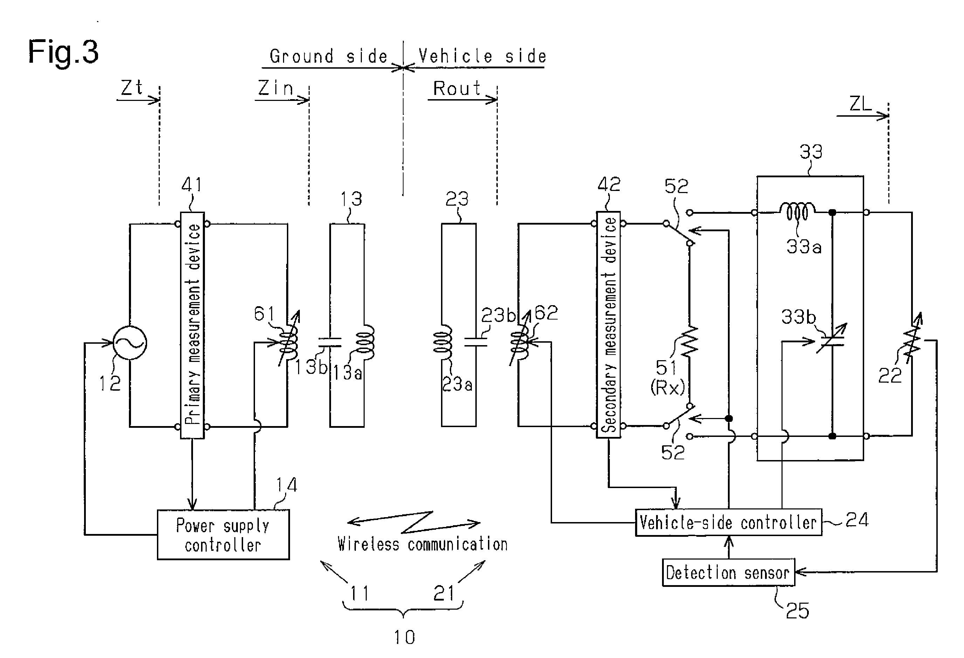

Although the impedance converters 31 to 33 are each formed by an LC circuit in the embodiment, there is no limit to such a configuration. For example, as shown in Fig. 3, the first impedance converter 31 may be replaced by a primary induction coil 61 having a variable inductance. The primary induction coil 61 cooperates with the primary coil 13a to form a transformer. Power transfer between the primary induction coil 61 and the power transmitter 13 is performed through electromagnetic induction. In this case, it is preferred to set the inductance of the primary induction coil 61 so that the primary induction coil 61 functions as the first impedance converter 31.

In the same manner, the second impedance converter 32 may be replaced by a secondary induction coil 62 having a variable inductance arranged between the power receiver 23 and the secondary measurement device 42. The secondary induction coil 62 cooperates with the secondary coil 23a to form a transformer. Power transfer between the power receiver 23 and the secondary induction coil 62 is performed through electromagnetic induction. In this case, it is preferred to set the inductance of the secondary induction coil 62 so that the secondary induction coil 62 operates as the second impedance converter 32.

At least one of the impedance converters 31 to 33 may be replaced by a transformer.

The first impedance converter 31 may impedance-convert the impedance Zin from the input terminal of the power transmitter 13 to the variable load 22 so that the power factor is improved (reactance of a predetermined impedance approaches zero).

Although the three impedance converters 31 to 33 are arranged in the embodiment, there is no limit to such a configuration. For example, the first impedance converter 31 may be omitted. Alternatively, the ground-side device 11 may include an impedance converter, which improves the power factor, other than the first impedance converter 31. Additionally, the third impedance converter 33 may be omitted.

Although the embodiment includes the third impedance converter 33 having a variable constant, there is no limit to such a configuration. The third impedance converter 33 may have a fixed constant. In this case, it is preferred to variably control the constant of the second impedance converter 32 to follow variations in the impedance ZL of the variable load 22. However, it is preferred that the third impedance converter 33 has a variable constant when the focus is put on the capability to appropriately follow both of variations in the relative position of the coils 13a, 23a and in the impedance ZL of the variable load 22. Additionally, the first impedance converter 31 may have a fixed constant.

The resistance Rx of the fixed resistor 51 may have any value. In this case, the constant of the third impedance converter 33 in the initial state is set in correspondence with the resistance Rx of the fixed resistor 51 so that the impedance from the input terminal of the third impedance converter 33 to the variable load 22 is equal to the resistance Rx of the fixed resistor 51 under a situation in which the charging high frequency power is output. Alternatively, the constant of the third impedance converter 33 may have any value. In this case, the resistance Rx of the fixed resistor 51 is set in correspondence with the constant of the third impedance converter 33.

Although the adjusting high frequency power differs from the charging high frequency power in value in the embodiment, there is no limit to such a configuration. The adjusting high frequency power and the charging high frequency power may have the same value.

The constants of the impedance converters 31, 32 may each be variably controlled for the first time under a situation in which the charging high frequency power is output. In this case, the connected subject of the second impedance converter 32 may be one of the fixed resistor 51 and the third impedance converter 33.

The embodiment determines whether or not the high frequency power supply 12 outputs high frequency power having a value that equals to the value of the adjusting high frequency power. Instead, it may be determined whether or not the impedance from the output terminal of the high frequency power supply 12 to the variable load 22 equals to the input impedance suited for charging Zt (or a difference between the impedance from the output terminal of the high frequency power supply 12 to the variable load 22 and the input impedance suited for charging Zt is within an allowed range).

The impedance converters 31 to 33 each may have any specific configuration without limitation to the configuration of the above embodiment. For example, a π-type or a T-type may be used.

The high frequency power supply 12 may output high frequency power having any voltage waveform, such as a pulse waveform or a sine waveform.

Although the power transmitter 13 and the power receiver 23 have the same resonance frequency in the embodiment, there is no limit to such a configuration. The power transmitter 13 and the power receiver 23 may have different resonance frequencies within a range in which power transfer can be performed.

Although the power transmitter 13 and the power receiver 23 have the same configuration in the embodiment, there is no limit to such a configuration. The power transmitter 13 and the power receiver 23 may have different configurations.

The capacitors 13b, 23b may be omitted from the embodiment. In this case, magnetic field resonance is performed using the parasitic capacitor of each of the coils 13a, 23a.

Although magnetic field resonance is used to achieve wireless power transfer in the embodiment, there is no limit to such a configuration. Electromagnetic induction may be used.

Although the wireless power transfer apparatus 10 is applied to a vehicle in the embodiment, there is no limit to such a configuration. The wireless power transfer apparatus 10 may be applied to a different device. For example, the wireless power transfer apparatus 10 may be used to charge a battery of a cell phone.

Although the variable load 22 of the embodiment includes the rectifier and the vehicle battery, there is no limit to such a configuration. The variable load 22 may include a different electronic device.

The component controlling the high frequency power supply 12 is not limited to the power supply controller 14 and thus may be, for example, the vehicle-side controller 24. For example, the vehicle-side controller 24 may transmit instructions to activate and deactivate high frequency power of the high frequency power supply 12 and to set the value of the high frequency power output from the high frequency power supply 12 to the power supply controller 14. Then, the power supply controller 14 drives the high frequency power supply 12 based on the instructions. In this case, the value of power output from the high frequency power supply 12 may be acknowledged without receiving the information of the value of the high frequency power from the power supply controller 14. More specifically, the "acknowledgement unit" is not limited to a configuration to perform acknowledgment by receiving the information from the power supply controller 14. The "acknowledgement unit" includes a configuration to perform acknowledgment by directly controlling the high frequency power supply 12.

In the above configuration, the power supply controller 14 also acknowledges the value of high frequency power output from the high frequency power supply 12, for example, by receiving the instruction from the vehicle-side controller 24. That is, the ground-side device 11 and the vehicle-side device 21 each include the acknowledgement unit, which acknowledges the value of high frequency power output from the high frequency power supply 12. However, there is no limit to such a configuration. One of the ground-side device 11 and the vehicle-side device 21 may include the acknowledgement unit.

The component controlling the relay 52 is not limited to the vehicle-side controller 24 and thus may be, for example, the power supply controller 14. Additionally, any component may control each of the impedance converters 31 to 32. For example, only one of the controllers 14, 24 may control the impedance converters 31 to 33. Alternatively, a dedicated control unit may be arranged other than the controllers 14, 24.

When the embodiment variably controls the constant of each of the impedance converters 31, 32 during charging (second time or later), the connected subject of the second impedance converter 32 is maintained to the third impedance converter 33. However, there is no limit to such a configuration. For example, the connected subject of the second impedance converter 32 may be switched to the fixed resistor 51 when the constants of the impedance converters 31, 32 are each variably controlled during charging.

The power transmitter 13 may include a resonance circuit formed by the primary coil 13a and the primary capacitor 13b and a primary coupling coil that is coupled to the resonance circuit through electromagnetic induction. In this case, the resonance circuit receives high frequency power from the primary coupling coil through electromagnetic induction. In the same manner, the power receiver 23 may include a resonance circuit formed by the secondary coil 23a and the secondary capacitor 23b and a secondary coupling coil that is coupled to the resonance circuit through electromagnetic induction. The secondary coupling coil may be used to extract power from the resonance circuit of the power receiver 23.

The high frequency power supply 12 may be one of an electric power source, a voltage source, and a current source.

When an electric power source is employed as the high frequency power supply 12, the impedance converters 31 to 33 may be used to match impedance. More specifically, the first impedance converter 31 impedance-converts the impedance Zin from the input terminal of the power transmitter 13 to the variable load 22 so that the impedance from the output terminal of the high frequency power supply 12 to the variable load 22 matches output impedance of the high frequency power supply 12. In this case, such impedance that matches the output impedance of the high frequency power supply 12 corresponds to "predetermined impedance".

Also, the second impedance converter 32 impedance-converts the impedance from the input terminal of the third impedance converter 33 to the variable load 22 so that the impedance from the output terminal of the power receiver 23 to the variable load 22 matches the impedance from the output terminal of the power receiver 23 to the high frequency power supply 12.

In this configuration, the primary measurement device 41 measures reflected wave power that is directed from the power transmitter 13 to the high frequency power supply 12, and the secondary measurement device 42 measures reflected wave power that is directed from the second impedance converter 32 to the high frequency power supply 12. It is preferred that the controllers 14, 24 variably control the constants of the impedance converters 31, 32, respectively, so that each piece of the reflected wave power decreases in value when the value of each piece of the reflected wave power increases under a situation in which the value of high frequency power output from the high frequency power supply 12 is unvaried. In the above configuration, it is also preferred that variable control is simultaneously performed on the constants of the impedance converters 31, 32.

Although the embodiment employs transfer efficiency as an electrical property that is dependent on the relative position of the coils 13a, 23a, there is no limit to such a configuration. For example, a value of high frequency power received by the power receiver 23 or impedance may be employed. Alternatively, these parameters may be combined. The electrical property only needs to include at least one of transfer efficiency, a value of high frequency power received by the power receiver 23, a value of reflected wave power, and impedance.

The impedance described here may be, for example, the impedance from the output terminal of the power receiver 23 to the high frequency power supply 12 or the impedance Zin from the input terminal of the power transmitter 13 to the variable load 22.

The ground-side device 11 may include two or more impedance converters. Also, the vehicle-side device 21 may include three or more impedance converters.

The third impedance converter 33 may be replaced by a DC/DC converter arranged between the rectifier and the vehicle battery and including a switching element that periodically switches. In this case, the impedance ZL of the variable load 22 is dependent on a duty ratio of activation and deactivation of the switching element. Thus, the impedance ZL of the variable load 22 may be set to be constant by adjusting the duty ratio in accordance with the value of high frequency power output from the high frequency power supply 12. In this case, the vehicle battery corresponds to the "variable load". The DC/DC converter corresponds to the "second impedance conversion unit". The adjustment of the duty ratio may be also referred to as an adjustment of the impedance of the DC/DC converter. That is, high frequency power received by the secondary coil 23a is input to the "variable load", or the high frequency power is rectified to direct current and input to the "variable load".

A DC/DC converter may be arranged in addition to the third impedance converter 33. In this case, it is preferred that the third impedance converter 33 has a fixed constant, and the duty ratio of activation and deactivation of the switching element in the DC/DC converter is adjusted.

## Claims

1. A power receiving device capable of receiving alternating current power in a wireless manner from a power supply device including an alternating current power supply that outputs the alternating current power and a primary coil that receives the alternating current power, the power receiving device comprising:
a secondary coil capable of receiving the alternating current power from the primary coil;
a variable load having impedance that varies in accordance with a value of input power;
an impedance conversion unit arranged between the secondary coil and the variable load and configured to have a variable impedance; and
an acknowledgement unit that acknowledges a value of the alternating current power output from the alternating current power supply,
wherein, under a situation in which the acknowledgement unit acknowledges that the value of the alternating current power output from the alternating current power supply is unvaried, the impedance of the impedance conversion unit is variably controlled when an electrical property that is dependent on a relative position of the primary coil and the secondary coil varies.

2. The power receiving device according to claim 1, wherein the electrical property includes at least one of transfer efficiency, the value of the alternating current power received by the secondary coil, a value of reflected wave power, and impedance.

3. The power receiving device according to claim 1 or 2, wherein
the impedance conversion unit includes a first impedance conversion unit and a second impedance conversion unit,
the second impedance conversion unit is arranged between the first impedance conversion unit and the variable load and configured to have a variable impedance, and
the impedance of the second impedance conversion unit is variably controlled when the value of the alternating current power output from the alternating current power supply varies.

4. The power receiving device according to claim 3, wherein, when the impedance of the variable load varies, the impedance of the second impedance conversion unit is variably controlled so that impedance from an input terminal of the second impedance conversion unit to the variable load is constant.

5. The power receiving device according to any one of claims 1 to 4, wherein impedance from an output terminal of the secondary coil to the variable load has a real part including a specific resistance that increases the transfer efficiency to be relatively higher than another resistance, and
the impedance conversion unit performs an impedance-conversion so that the impedance from the output terminal of the secondary coil to the variable load approaches the specific resistance.

6. The power receiving device according to claim 5, wherein the specific resistance is √(Ra1×Rb1) when a virtual load having a resistance of Ra1 is arranged at an input terminal of the primary coil and resistance from the secondary coil to the virtual load is represented by Rb1.

7. The power receiving device according to claim 3, further comprising:
a fixed load arranged separately from the variable load and having a fixed impedance regardless of the value of the input power; and
a switch that switches an output destination, to which the alternating current power received by the secondary coil is output from the first impedance conversion unit, to the fixed load or to the second impedance conversion unit and the variable load.

8. The power receiving device according to claim 7, wherein, under a situation in which the output destination, to which the alternating current power received by the secondary coil is output from the first impedance conversion unit, is set to the second impedance conversion unit and the variable load, when the electrical property varies while the acknowledgement unit acknowledges that the value of the alternating current power output from the alternating current power supply is unvaried, the switch keeps the output destination, to which the alternating current power received by the secondary coil is output from the first impedance conversion unit, to the second impedance conversion unit and the variable load.

9. The power receiving device according to claim 7, wherein
when variable control is performed on the impedance of the first impedance conversion unit for the first time from when reception of power from the power supply device starts, the switch switches the output destination, to which the alternating current power received by the secondary coil is output from the first impedance conversion unit, to the fixed load, and
when variable control is performed on the impedance of the first impedance conversion unit for the second time or later, the switch switches the output destination, to which the alternating current power received by the secondary coil is output from the first impedance conversion unit, to the second impedance conversion unit and the variable load.

10. A wireless power transfer apparatus comprising:
the power supply device; and
the power receiving device according to any one of claims 1 to 9.

11. The wireless power transfer apparatus according to claim 10, further comprising a control unit, wherein
the power supply device includes a primary impedance conversion unit arranged between the alternating current power supply and the primary coil,
the primary impedance conversion unit impedance-converts impedance from an input terminal of the primary coil to the variable load so that impedance from an output terminal of the alternating current power supply to the variable load approaches a predetermined impedance, and
under a situation in which the value of the alternating current power output from the alternating current power supply is unvaried, when the electrical property varies, the control unit variably controls the impedance of the impedance conversion unit and the impedance of the primary impedance conversion unit.

12. A power supply device capable of transferring alternating current power in a wireless manner to a power receiving device including a secondary coil, the power supply device comprising:
an alternating current power supply that outputs the alternating current power;
a primary coil that receives the alternating current power;
an impedance conversion unit arranged between the alternating current power supply and the primary coil and configured to have a variable impedance; and
an acknowledgement unit that acknowledges the value of the alternating current power output from the alternating current power supply,
wherein, under a situation in which the acknowledgement unit acknowledges that the value of the alternating current power output from the alternating current power supply is unvaried, the impedance of the impedance conversion unit is variably controlled when an electrical property that is dependent on a relative position of the primary coil and the secondary coil varies.
